(19) **Europäisches Patentamt / European Patent Office / Office européen des brevets**

(11) **EP 2 151 917 A2**

(12) **EUROPEAN PATENT APPLICATION**

(43) Date of publication:
   **10.02.2010 Bulletin 2010/06**

(51) Int Cl.:
   *H02P 6/18* (2006.01)   *H02P 6/00* (2006.01)

(21) Application number: **09167131.3**

(22) Date of filing: **04.08.2009**

(84) Designated Contracting States:
   **AT BE BG CH CY CZ DE DK EE ES FI FR GB GR HR HU IE IS IT LI LT LU LV MC MK MT NL NO PL PT RO SE SI SK SM TR**
   Designated Extension States:
   **AL BA RS**

(30) Priority: **05.08.2008 IT TO20080616**

(71) Applicant: **BITRON S.p.A.**
   **10122 Torino (IT)**

(72) Inventors:
   • **Bianconi, Enrico**
    **10040 Rivalta Di Torino (Torino) (IT)**

   • **Zesi, Mara**
    **10095 Grugliasco (Torino) (IT)**
   • **Cecchini, Giovanni**
    **10010 Settimo Rottaro (Torino) (IT)**
   • **Musiol, Grzegorz**
    **41-909 Bytom (PL)**

(74) Representative: **Quinterno, Giuseppe et al**
   **Jacobacci & Partners S.p.A.**
   **Corso Emilia 8**
   **10152 Torino (IT)**

(54) **Method for controlling a two-phase d.c. brushless motor without a position sensor**

(57)   The method allows the control in steady state, without a position sensor, of a two-phase d.c. brushless motor (BM) comprising a permanent magnet rotor (R) and two phase windings (W1, W2) connected in series to respective electronic switches (M1, M2) between the two poles of a d.c. voltage supply source ($V_{CC}$). The switches (M1, M2) are driven in such a way that they are rendered alternately conductive.

   The method comprises the operations of:

detecting the amplitude of the current flowing through the motor (BM);

comparing the instantaneous value of a predetermined control variable (I(t); t) with a threshold ($I_{thr}$; $t_{thr}$) computed as a predetermined function of the detected amplitude of the current flowing through the motor (BM); and

causing said electronic switches (M1, M2) to change state when the value of the control variable (I(t); t) exceeds the threshold ($I_{thr}$; $t_{thr}$).

FIG. 1

EP 2 151 917 A2

**Description**

The present invention relates to a method for controlling a two-phase d.c. brushless motor without a position sensor.

More specifically, the invention relates to a method for controlling, in steady state (in other words, not in the starting phase) and without a position sensor, a two-phase d.c. brushless motor, the motor comprising in a known way a permanent magnet rotor and two phase windings connected in series to respective electronic switches between the two poles of a d.c. voltage supply source, said switches being driven in such a way that they are rendered alternately conductive.

Two-phase brushless motors are widely used because of their structural simplicity, high efficiency, silent running and maintenance-free operation.

A typical field of application of such motors is that of low-power ventilation (in fans for computers or refrigerators, for example).

In prior art brushless motors, a position sensor, typically a Hall effect magnetic field sensor, is used to identify the angular position of the rotor at which the state (on/off) of the electronic switches associated with the phase windings has to be changed.

The use of a position sensor gives rise to a number of problems, since the sensor has to be accurately positioned to detect the magnetic flux created by the rotor without interference by the stator windings. This creates a number of problems in respect of the mechanism and assembly.

In view of this drawback, solutions have been proposed to eliminate the position sensor.

US patent 7 183 734 discloses a solution in which a two-phase brushless motor is controlled according to the analysis of a detected voltage, corresponding to the electromotive force (EMF) induced in the stator windings.

The object of the present invention is to propose an alternative method for controlling a two-phase d.c. brushless motor in steady state without a position sensor.

This and other objects are achieved according to the invention with the method defined above, characterized in that it comprises the following operations:

detecting the amplitude of the current flowing through the motor;
comparing the instantaneous value of a predetermined control variable with a threshold computed as a predetermined function of the detected amplitude of the current flowing through the motor; and
causing said electronic switches to change state when the value of the control variable exceeds the threshold.

In a first embodiment, the control variable is the detected magnitude of the current flowing in the motor. In this case, the associated threshold is computed, for example, as a predetermined function of the supply voltage and of the estimated angular velocity of the rotor.

Alternatively, the threshold can be computed according to a function, in particular a linear function, of the minimum value of the time derivative of the current flowing in the motor.

In another embodiment, the control variable is the time elapsed since the preceding change of state of the electronic switches associated with the phase windings. In this case, the associated threshold is computed according to a function, in particular a linear function, of the time elapsed from the preceding change of state of said switches to the instant at which the time derivative of the current in the motor assumes a minimum value.

Further features and advantages of the invention will be made clear by the following detailed description, provided purely by way of non-limiting example, with reference to the appended drawings, in which:

Figure 1 is a circuit diagram, partially in the form of a block diagram, of a device for applying the control method according to the present invention; and
Figures 2 and 3 are circuit diagrams, partially in the form of block diagrams, of two variant embodiments.

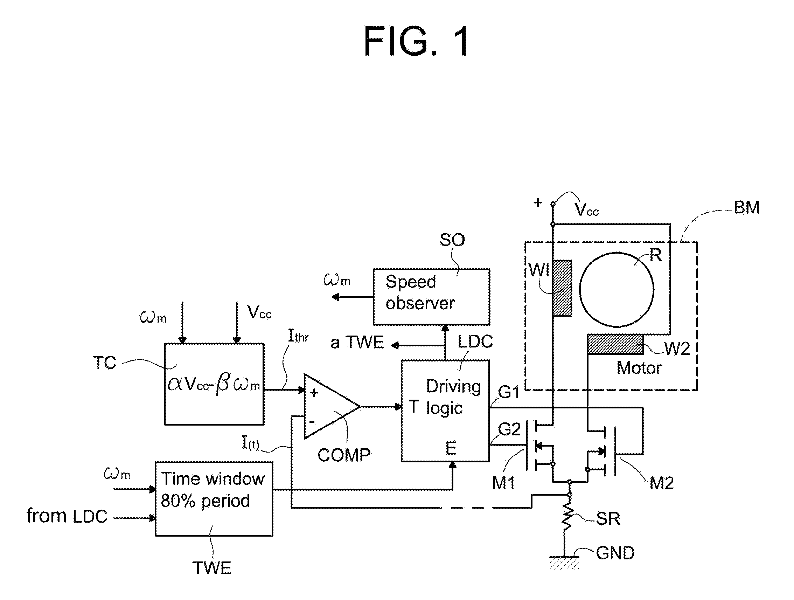

In Figure 1, BM indicates the whole of a two-phase d.c. brushless motor. This motor has no position sensor, and comprises, in a known way, a permanent magnet rotor R and two phase windings W1 and W2, each connected in series with a respective electronic switch M1, M2 between the two poles of a direct current voltage supply source $V_{cc}$.

The switches M1 and M2 are, for example, MOSFET transistors.

In the illustrated example of embodiment, a shunt resistor SR is connected between the switches M1, M2 and the earth GND. In operation, the resistor SR provides a voltage proportional to the amplitude of the current I flowing in the motor BM.

The use of a shunt resistor as a current sensor is mentioned purely by way of example. Other known solutions may be used in place of this.

The signal I(t) made available for use by the resistor SR is applied to a first input of a comparator COMP, which then compares it with a threshold $I_{thr}$.

When the signal I(t) exceeds the threshold $I_{thr}$, in other words when the current flowing in the motor BM exceeds a corresponding threshold, the comparator COMP applies a logical signal, at the level "1" for example, to an input T (toggle input) of a driver logic circuit LDC which has two outputs G1 and G2 connected to the command (gate) inputs of the switches M1 and M2.

The driver logic circuit LDC has an additional input E (the Enable input). This logic circuit LDC causes the switches M1 and M2 to change state when a signal at level "1" is present at its inputs T and E simultaneously.

SO indicates a unit for "observing" the rotation speed of the motor BM. This unit receives from the driver logic circuit LDC a signal indicating the change of state of the switches M1 and M2, and from this signal it computes the instantaneous angular velocity $\omega_m$ of the motor BM. To obtain the best estimate of the velocity $\omega_m$, the unit SO can be designed to implement filtering with a first-order algorithm IIR.

The information relating to the angular velocity $\omega_m$ of the motor BM is supplied to a unit TC which computes the threshold $I_{thr}$, and to a time window enabling unit TWE which is described below.

The unit TC is also connected to the voltage supply source $V_{cc}$, and is designed to compute the threshold $I_{thr}$ according to a predetermined function of this voltage $V_{cc}$ and of the estimated angular velocity $\omega_m$ of the rotor.

The threshold is conveniently computed, for example, according to a linear function of the following type:

$$I_{thr} = \alpha \, V_{cc} - \beta \, \omega_m$$

where $\alpha$ and $\beta$ are predetermined values, characteristic of the specific motor BM which is used; $\alpha$ and $\beta$ can be parameters whose values can be modified if required according to predetermined procedures as the operating conditions change.

The time window enabling unit TWE is designed to supply an enabling signal to the input E of the driver logic circuit LDC only after a predetermined period has elapsed since the immediately preceding change of state of the switches M1 and M2.

This predetermined period can be conveniently specified as a predetermined percentage, in particular in the range from 50% to 90%, and preferably equal to about 80%, of the period corresponding to the velocity (rotation frequency) or pulsation of the rotor R.

For this purpose, as shown in Figure 1, the information relating to the angular velocity $\omega_m$ and the switching signal supplied by the logic circuit LDC, indicating the changes of state of the electronic switches M1 and M2, are supplied to the unit TWE.

Although the various functions for controlling the motor BM are shown in the form of units in Figure 1, these functions can clearly be implemented entirely by means of software using a microcontroller, or by means of an integrated circuit of the custom or similar type.

The motor control mode described above is used, as stated previously, when the motor is running in steady state conditions, in other words when it rotates at a velocity above a minimum level, after the starting and initial positioning phase.

The starting and initial positioning phase can be executed by any of the known methods, for example by means of a sequence of changes of state of the switches M1 and M2 at variable velocity, with acceleration such that the motor is brought to full current level before the application of the control method described above.

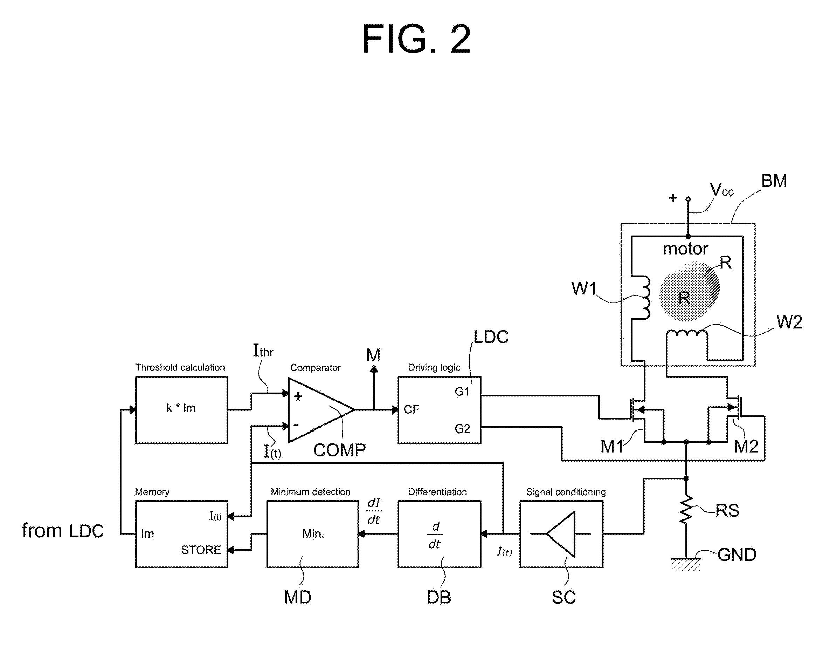

Figure 2 shows a first variant embodiment of the invention.

In this drawing, parts and elements described previously have been given the same reference symbols as those used previously.

The variant of Figure 2 is essentially based on the monitoring of the variation of the current flowing through the motor. When a current flows in a winding of the motor BM, the variation in the angular position of the rotor R causes a variation of the inductance of this winding. This variation is manifested as a variation of the "slope" of the current flowing through the winding, and therefore information on the angular position of the rotor R can be obtained by monitoring the variation of this current.

The diagram in Figure 2 shows the operating principle of this variant.

In this case also, the current flowing through the motor BM is detected, by means of a shunt resistor RS for example. The signal indicating the current in the motor is amplified and filtered in a processing unit SC. The signal I(t) from the output of this unit is supplied, on the one hand, to an input of a comparator COMP and to a storage unit M, and, on the other hand, to the input of a differentiation unit DB. The latter unit computes the first time derivative of the signal I(t), in other words that of the current flowing through the motor.

The unit DB is connected to the input of a minimum detection unit MD, designed to identify the minimum value of the first time derivative of the current. This minimum value provides an indication of a position of the rotor R.

When the first derivative of the current in the motor reaches the minimum value, a signal is supplied to the STORE input of the storage unit M. This unit then stores the value $I_m$ of the current in the motor at the moment when the derivative of this current is minimal.

The stored value $I_m$ is supplied to the input of a unit TC for computing the threshold $I_{thr}$. This unit is conveniently designed to compute the threshold $I_{thr}$ according to the function, in particular a linear function, of the minimum value $I_m$.

With reference to Figure 2, in the illustrated example the minimum value $I_m$ is simply multiplied by a predetermined constant coefficient k.

The comparator COMP then compares the signal I(t) representing the current in the motor with the threshold $I_{thr}$.

When I(t) exceeds the threshold $I_{thr}$, the comparator COMP supplies to an input CF of the driver logic circuit LDC a signal such that the electronic switches M1 and M2 are made to change their state.

At the moment of the change of state, the store M is reset, and the whole operating cycle recommences as described above.

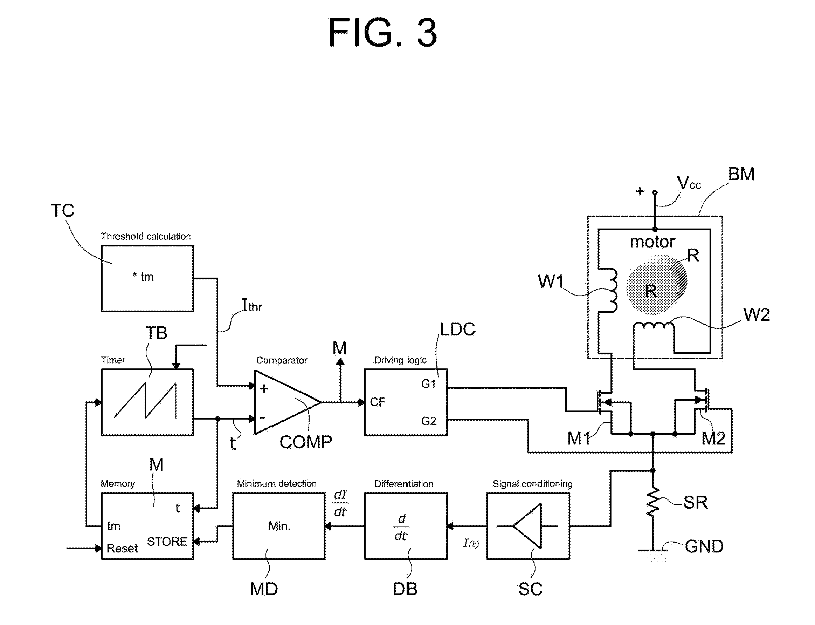

Figure 3 shows a further variant embodiment of the method according to the invention. In this drawing also, parts and elements described previously have been given the same alphanumeric references as those used previously.

With reference to the diagram of Figure 3, the units SC, DB and MD operate in the way described above with reference to Figure 2.

The circuit of Figure 3 includes a timer TB, implemented for example in the form of a resettable counter, substantially equivalent to an analogue implementation in the form of a ramp generator.

The output of the timer TB is connected to an input t of the storage unit M, and to a first input of a comparator COMP.

When the minimum detection unit MD detects that the time derivative of the current flowing through the motor has reached a minimum value, the storage unit M stores the signal arriving from the timer TB at that instant.

Since the timer TB is reset at every change of state of the switches M1 and M2, the value $t_m$ stored in the store M represents the time elapsed from the preceding change of state to the instant at which the derivative of the current flowing through the motor has assumed its minimum value.

In the circuit according to Figure 3, the threshold computing unit TC is connected to the store M and is designed to generate a threshold $t_{thr}$ computed according to a predetermined function, in particular a linear function, of the time $t_m$. In the specific example which is illustrated, the unit TC computes the threshold $t_{thr}$ by multiplying the time $t_m$ by a predetermined constant c.

In the variant according to Figure 3, the control variable is therefore the time t elapsed since the preceding change of state of the electronic switches M1 and M2, which is compared with the threshold $t_{thr}$ in the comparator COMP.

At each change of state, the store M (in addition to the timer TB) is also reset, and the cycle recommences from the beginning as described above.

In the variants according to Figures 2 and 3, the control method according to the invention can also be implemented by means of a microprocessor or microcontroller, or an integrated circuit of the custom or similar type.

Clearly, provided that the principle of the invention is retained, the forms of application and the details of construction can be varied widely from what has been described and illustrated purely by way of non-limiting example, without thereby departing from the scope of protection of the invention as defined by the attached claims.

**Claims**

1. Method for controlling, in steady-state and without position sensors, a two-phase d.c. brushless motor (BM) comprising a permanent magnet rotor (R) and two phase windings (W1, W2) connected in series with respective electronic switches (M1, M2) between the two poles of a d.c. voltage supply source ($V_{cc}$), said switches (M1, M2) being driven in such a way that they are rendered alternately conductive, the method being **characterized in that** it includes the steps of

    detecting the amplitude of the current flowing through the motor (BM);
    comparing the instantaneous value of a predetermined control variable (I(t); t) with a threshold ($I_{thr}$; $t_{thr}$) computed as a predetermined function of the detected amplitude of the current flowing through the motor (BM); and
    causing said electronic switches (M1, M2) to change state when the value of the control variable (I(t); t) exceeds the threshold ($I_{thr}$; $t_{thr}$).

2. Method according to Claim 1, wherein the control variable is the detected amplitude or strength (I(t)) of the current flowing through the motor (BM).

3. Method according to Claim 2, wherein the angular speed ($\omega_m$) of the rotor (R) is estimated, and the threshold ($I_{thr}$) is computed according to a predetermined function of the supply voltage ($V_{cc}$) provided by said source and of the estimated angular speed ($\omega_m$) of the rotor (R).

4. Method according to Claim 3, wherein the threshold ($I_{thr}$) is computed according to a linear function of the kind

$$I_{thr} = \alpha \, V_{CC} - \beta \, \omega_m$$

where $I_{thr}$ is the threshold, $V_{CC}$ is the supply voltage provided by the source, $\omega_m$ is the estimated angular speed of the rotor (R), and $\alpha$ and $\beta$ are predetermined values which are characteristic of the specific motor (BM).

5. Method according to Claim 3 or 4, wherein the change of state of the said electronic switches (M1, M2) is enabled only after a period of time has elapsed from the immediately preceding change of state.

6. Method according to Claim 5, wherein said predetermined period of time is a predetermined percentage, in particular comprised between 50% and 90% and preferably equal to about 80%, of the period corresponding to the angular speed or pulsation ($\omega_m$) of the rotor (R).

7. Method according to Claim 2, wherein the threshold ($I_{thr}$) is computed according to a function, and in particular a linear function, of the minimum value ($I_m$) of the first time derivative of the current (I(t)) detected in the motor (BM).

8. Method according to Claim 1, wherein the control variable is the time (t) elapsed from the preceding change of state of said electronic switches (M1, M2).

9. Method according to Claim 8, wherein the threshold ($t_{thr}$) is computed according to a function, in particular a linear function, of the time ($t_m$) elapsed from the preceding change of state to the moment at which the first time derivative of the detected current (I(t)) in the motor assumes a minimum value ($I_m$).

# FIG. 1

# FIG. 2

# FIG. 3

EP 2 151 917 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7183734 B